# EUROPEAN PATENT APPLICATION

(11) **EP 4 339 332 A1**
(43) Date of publication of application: **20.03.2024**
(21) Application number: 22802878.3
(22) Date of filing: 10.05.2022
(51) Int. Cl.: C25B 9/00, C01B 3/02, C25B 1/04, C25B 9/67, C25B 11/042, C25B 11/052, C25B 11/054, C25B 11/077, C25B 11/091, C25B 15/00, C25B 15/021, C25B 15/031

(54) **WATER ELECTROLYSIS APPARATUS AND CONTROL METHOD THEREOF**

(30) Priority: 12.05.2021 JP 2021081259
(71) Applicant: Panasonic Intellectual Property Management Co., Ltd., Osaka-shi, Osaka 540-6207 (JP)
(72) Inventor: SHIRATAKI, Hiroshi, Kadoma-shi Osaka 571-0057 (JP); HAYASHI, Takao, Kadoma-shi Osaka 571-0057 (JP); ASAZAWA, Koichiro, Kadoma-shi Osaka 571-0057 (JP); MURASE, Hideaki, Kadoma-shi Osaka 571-0057 (JP)
(74) Representative: Grünecker Patent- und Rechtsanwälte PartG mbB
(86) International application number: PCT/JP2022/019751
(87) International publication number: WO 2022/239757

(57) **Abstract**

A water electrolyzer includes an electrochemical cell including an anode and a cathode, an electrolyte solution, a heater, a voltage applicator, and a controller. The heater heats the electrolyte solution. The voltage applicator applies a voltage between the anode and the cathode. The electrochemical cell includes nickel. In startup of the water electrolyzer, the controller causes the heater to increase the temperature of the electrolyte solution by heating and causes the voltage applicator to start application of a voltage when the temperature of the electrolyte solution is less than a predetermined threshold value.

## Description

### Technical Field

The present disclosure relates to a water electrolyzer and a method for controlling the water electrolyzer.

### Background Art

The development of water electrolyzers has been anticipated. Water electrolyzers enable the production of hydrogen from water and electric power generated from renewable energy. Water electrolyzers are advantageous in terms of low initial costs. This advantage is particularly appreciated when they are alkali separation membrane-type water electrolyzers or anion exchange membrane-type water electrolyzers, because these water electrolyzers include an alkaline or neutral aqueous solution as an electrolyte solution and are therefore capable of including non-noble metal materials, which are poorly resistant to acids. There has been active development of a water electrolyzer capable of producing hydrogen in a consistent and efficient manner.

### Citation List

### Non Patent Literature

NPL 1: Corrosion Science, Vol. 39, No. 5, 969-980, 1997

### Summary of Invention

### Technical Problem

The present disclosure reduces the degradation of nickel included in an electrochemical cell.

### Solution to Problem

The present disclosure provides a water electrolyzer used for water electrolysis, the water electrolyzer including:
an electrochemical cell including an anode and a cathode;
an electrolyte solution;
a heater that heats the electrolyte solution;
a voltage applicator that applies a voltage between the anode and the cathode; and
a controller, wherein
the electrochemical cell includes nickel,
in startup of the water electrolyzer, the controller causes the heater to increase a temperature of the electrolyte solution by heating, and
the controller causes the voltage applicator to start application of a voltage when the temperature of the electrolyte solution is less than a predetermined threshold value. Advantageous Effects of Invention

According to the present disclosure, the degradation of nickel included in an electrochemical cell can be reduced.

### Brief Description of Drawings

[Fig. 1] Fig. 1 is a schematic cross-sectional view of an example of an anion exchange membrane-type water electrolysis cell.
[Fig. 2] Fig. 2 is a schematic cross-sectional view of an example of an anion exchange membrane-type water electrolyzer.
[Fig. 3] Fig. 3 is a schematic cross-sectional view of an example of an alkali separation membrane-type water electrolysis cell.
[Fig. 4] Fig. 4 is a schematic cross-sectional view of an example of an alkali separation membrane-type water electrolyzer.
[Fig. 5] Fig. 5 is a diagram schematically illustrating an example of the crystal structure of a layered double hydride (LDH).
[Fig. 6] Fig. 6 is a diagram schematically illustrating the degradation of a catalyst and a carrier that include nickel.
[Fig. 7] Fig. 7 includes Pourbaix diagrams of nickel.
[Fig. 8] Fig. 8 is a diagram schematically illustrating regions in which nickel is stable and regions in which nickel is likely to degrade.
[Fig. 9] Fig. 9 is a schematic diagram illustrating a switcher according to an example.
[Fig. 10] Fig. 10 is a flowchart illustrating a control method according to a specific example.
[Fig. 11] Fig. 11 includes graphs illustrating the XRD integral ratios obtained in Test Examples A2, A5, B2, and B3.
[Fig. 12] Fig. 12 includes graphs illustrating the XRD integral ratios obtained in Test Examples A3, A6, B4, and B5.
[Fig. 13] Fig. 13 includes graphs illustrating the XRD integral ratios obtained in Test Examples A4, A7, B6, and B7.
[Fig. 14] Fig. 14 is a diagram illustrating examples of XRD spectra of samples prepared in Test Examples C2, A2, and B3.

### Description of Embodiments

### <Underlying Knowledge Forming Basis of the Present Disclosure>

Renewable energy, such as sunlight or wind power, has been used. The use of renewable energy reduces the amount of fossil fuel used in thermal power plants. A reduction in the amount of fossil fuel used results in a reduction in the amount of carbon dioxide emitted into the atmosphere. Therefore, attention has been placed on renewable energy as an energy source important for addressing the global warming issues. Since the amount of electric power generated from renewable energy may vary by season, there has been a demand for effective energy management.

Hydrogen may be used for the energy management. Hydrogen can be used as a secondary energy that can be stored in a large scale and a large capacity. Hydrogen can be produced from water and electric power generated from renewable energy. There has been development of a water electrolyzer that produces hydrogen from the electric power and water.

A water electrolyzer includes an electrochemical cell. If a rated current is passed through a water electrolyzer in the startup of the water electrolyzer when the temperature of the electrolyte solution is low, the voltage of the water electrolysis cell (cell voltage) may rapidly increase and an anomaly may occur in the water electrolysis cell because the cell resistance is high under a low-temperature condition. Therefore, the rated operation of a water electrolyzer is commonly performed by increasing the temperature of the electrolyte solution to the target temperature for the rated operation (e.g., about 80°C) and subsequently applying a current to the water electrolysis cell.

According to the studies conducted by the inventors of the present invention, controlling a water electrolyzer in an appropriate manner can reduce the chemical degradation of materials included in an electrochemical cell compared with the related art. For example, a reduction in the degradation limits a reduction in electrical conductivity. In addition, for example, a reduction in the degradation of materials included in a catalyst included in an electrochemical cell limits a reduction in specific activity. The reduction in degradation may increase the service life of a water electrolyzer. The reduction in degradation also contributes to the improvement of efficiency and consistency with which hydrogen is produced. The improvement of efficiency and consistency of production of hydrogen leads to a reduction in the costs for hydrogen production. Specifically, employing appropriate operating conditions in the startup of a water electrolyzer reduces the chemical degradation of materials included in an electrochemical cell compared with the related art.

Specifically, assume that, in the startup of the water electrolyzer, the application of a voltage by a voltage applicator is started after the temperature of the electrolyte solution has reached a temperature equal to or more than a predetermined threshold value. The above predetermined threshold value is, for example, a temperature lower than the target temperature to which the electrolyte solution is to be heated in the startup of the water electrolyzer. Such an operation is not always appropriate for reducing the chemical degradation of materials included in an electrochemical cell. According to the studies conducted by the inventors of the present invention, causing the voltage applicator to start application of a voltage when the temperature of the electrolyte solution is low can reduce the chemical degradation of materials included in an electrochemical cell.

The terms "startup of water electrolyzer" and "water electrolysis operation" used herein are described below. The term "water electrolysis operation" used herein refers to an operation performed by a water electrolyzer for water electrolysis, that is, for example, an operation in which water electrolysis is performed when a target current is applied to an electrochemical cell. The target current is a current at which the rated operation of water electrolysis is performed. The term "startup of water electrolyzer" used herein refers to an operation performed since the action of auxiliary devices used in the water electrolysis operation is started until the current applied to the electrochemical cell reaches the target current. Examples of the auxiliary devices include a valve, a pump, and a temperature-regulating devices.

A water electrolyzer according to a specific example includes a membrane electrode assembly (MEA). A membrane electrode assembly includes a separator, a diffusion layer, an anode electrode catalyst layer, a cathode electrode catalyst layer, and an electrolyte membrane. The water electrolyzer includes an electrochemical cell including a diffusion layer, an anode electrode catalyst layer, a cathode electrode catalyst layer, and an electrolyte membrane. The water electrolyzer is either an alkali separation membrane-type water electrolyzer or an anion exchange membrane-type water electrolyzer. The electrolyte solution is alkaline. In the startup, some of the components of the electrochemical cell undergo a hydroxylation reaction under an alkaline condition. Upon the occurrence of the reaction, nickel included in the electrochemical cell becomes degraded and the performance of the water electrolyzer may become degraded accordingly. The inventors of the present invention conducted extensive studies and consequently found a novel technology with which the degradation of nickel which occurs in the startup may be limited.

### <Summary of Aspects of the Present Disclosure>

A water electrolyzer according to a first aspect of the present disclosure includes an electrochemical cell including an anode and a cathode;
an electrolyte solution;
a heater that heats the electrolyte solution;
a voltage applicator that applies a voltage between the anode and the cathode; and
a controller.

The electrochemical cell includes nickel.

In startup of the water electrolyzer, the controller causes the heater to increase the temperature of the electrolyte solution by heating.

Furthermore, the controller causes the voltage applicator to start application of a voltage when the temperature of the electrolyte solution is less than a predetermined threshold value.

According to the first aspect, the degradation of nickel included in the electrochemical cell can be reduced.

According to a second aspect of the present disclosure, for example, in the water electrolyzer according to the first aspect,
the predetermined threshold value may be lower than a target temperature to which the electrolyte solution is to be heated.

The predetermined threshold value according to the second aspect is an example of the predetermined threshold value.

According to a third aspect of the present disclosure, for example, in the water electrolyzer according to the first or second aspect,
the predetermined threshold value may be a temperature equal to or less than 60°C.

The predetermined threshold value according to the third aspect is an example of the predetermined threshold value.

According to a fourth aspect of the present disclosure, for example, in the water electrolyzer according to the third aspect,
the predetermined threshold value may be a temperature equal to or less than 40°C.

The predetermined threshold value according to the fourth aspect is an example of the predetermined threshold value.

According to a fifth aspect of the present disclosure, for example, the water electrolyzer according to any one of the first to fourth aspects may further include a switcher that performs a switchover of the electrolyte solution fed to the electrochemical cell between a neutral electrolyte solution and an alkaline electrolyte solution.

Before the voltage applicator applies the voltage, the controller may cause the switcher to perform a switchover of the electrolyte solution to the neutral electrolyte solution.

After the voltage applicator applies the voltage, the controller may cause the switcher to perform a switchover of the electrolyte solution to the alkaline electrolyte solution.

According to the fifth aspect, a switchover of the electrolyte solution fed to the electrochemical cell can be performed.

According to a sixth aspect of the present disclosure, for example, in the water electrolyzer according to any one of the first to fourth aspects,
the electrolyte solution may be neutral at least in water electrolysis operation.

According to the sixth aspect, the degradation of nickel can be readily reduced.

According to a seventh aspect of the present disclosure, for example, in the water electrolyzer according to any one of the first to fourth aspects,
the electrolyte solution may be alkaline at least in the water electrolysis operation.

According to the seventh aspect, alkaline water electrolysis can be performed.

According to an eighth aspect of the present disclosure, for example, in the water electrolyzer according to any one of the first to seventh aspects,
at least one of an anode catalyst included in the anode and a cathode catalyst included in the cathode may include a layered double hydroxide, and
the layered double hydroxide may include nickel.

According to the eighth aspect, the degradation of nickel included in the layered double hydroxide can be reduced.

According to a ninth aspect of the present disclosure, for example, in the water electrolyzer according to any one of the first to eighth aspects,
at least one of a carrier included in the anode catalyst included in the anode and a carrier included in the cathode catalyst included in the cathode may include nickel.

According to the ninth aspect, the degradation of nickel included in the carrier can be reduced.

According to a tenth aspect of the present disclosure, for example, in the water electrolyzer according to any one of the first to eighth aspects,
at least one of the carrier included in the anode catalyst included in the anode and the carrier included in the cathode catalyst included in the cathode may include nickel particles.

According to the tenth aspect, the degradation of nickel particles included in the carrier can be reduced.

According to an eleventh aspect of the present disclosure, for example, in the water electrolyzer according to any one of the first to tenth aspects,
at least one of an anode diffusion layer included in the anode and a cathode diffusion layer included in the cathode may include nickel.

According to the eleventh aspect, the degradation of nickel included in the diffusion layer can be reduced.

A method for controlling a water electrolyzer according to a twelfth aspect of the present disclosure is
a method for controlling a water electrolyzer that includes an electrochemical cell including an anode and a cathode, an electrolyte solution, a heater that heats the electrolyte solution, and a voltage applicator that applies a voltage between the anode and the cathode, the electrochemical cell including nickel, the method including:
in startup of the water electrolyzer, causing the heater to increase a temperature of the electrolyte solution by heating, and
causing the voltage applicator to start application of a voltage when the temperature of the electrolyte solution is less than a predetermined threshold value.

According to the twelfth aspect, the degradation of nickel included in the electrochemical cell can be reduced.

Embodiments of the present disclosure are described with reference to the attached drawings below. Note that the present disclosure is not limited by the following embodiments.

### [Water Electrolyzer]

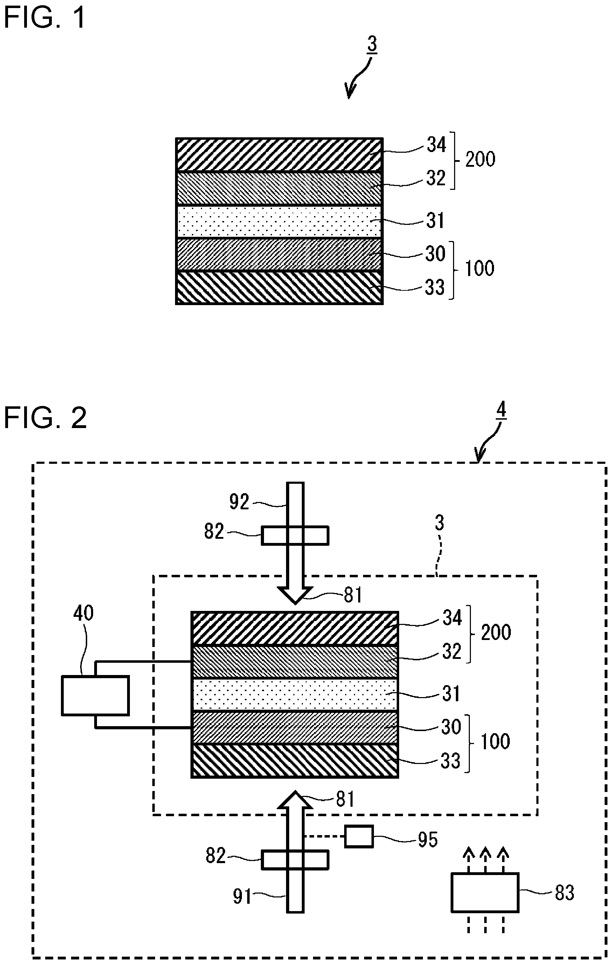

Fig. 1 is a cross-sectional view schematically illustrating an example of an anion exchange membrane-type water electrolysis cell. The water electrolysis cell 3 illustrated in Fig. 1 includes an electrolyte membrane 31, an anode 100, and a cathode 200. The electrolyte membrane 31 is interposed between the anode 100 and the cathode 200.

The anode 100 includes a catalyst layer 30 and an anode diffusion layer 33. The catalyst layer 30 is disposed on one of the principal surfaces of the electrolyte membrane 31. The anode diffusion layer 33 is disposed on the catalyst layer 30.

The cathode 200 includes a catalyst layer 32 and a cathode diffusion layer 34. The catalyst layer 32 is disposed on the other principal surface of the electrolyte membrane 31. The cathode diffusion layer 34 is disposed on the catalyst layer 32.

The catalyst layer 30 may be referred to as "anode electrode catalyst layer". The catalyst layer 32 may be referred to as "cathode electrode catalyst layer". The electrolyte membrane 31 is interposed between the anode electrode catalyst layer 30 and the cathode electrode catalyst layer 32. The anode diffusion layer 33 and the cathode diffusion layer 34 are arranged such that the above three elements are interposed therebetween.

Fig. 2 is a cross-sectional view schematically illustrating an example of an anion exchange membrane-type water electrolyzer. The water electrolyzer 4 illustrated in Fig. 2 includes a water electrolysis cell 3 and a voltage applicator 40. Since the water electrolysis cell 3 illustrated in Fig. 2 is the same as the water electrolysis cell 3 illustrated in Fig. 1, the description thereof is omitted.

The voltage applicator 40 is connected to the anode 100 and the cathode 200 of the water electrolysis cell 3. The voltage applicator 40 is a device that applies a voltage between the anode 100 and the cathode 200. The voltage applicator 40 causes the potential of the anode 100 to be relatively high and the potential of the cathode 200 to be relatively low. Specifically, the voltage applicator 40 applies a direct-current voltage between the anode 100 and the cathode 200.

The type of the voltage applicator 40 is not limited specifically and may be any voltage applicator capable of applying a voltage between the anode 100 and the cathode 200.

The voltage applicator 40 may, but does not necessarily, include a power source. The voltage applicator 40 may, but does not necessarily, include a power converter. Note that the concept of the term "power converter" used herein includes a DC/DC converter and an AC/DC converter.

In a first specific example, a direct-current power source is used. The voltage applicator 40 is connected to the direct-current power source. The voltage applicator 40 includes a DC/DC converter. Examples of the direct-current power source include a battery, a solar cell, and a fuel cell.

In a second specific example, an alternating-current power source is used. The voltage applicator 40 is connected to the alternating-current power source. The voltage applicator 40 includes an AC/DC converter. Examples of the alternating-current power source include a commercial power source.

In a third specific example, the voltage applicator 40 is a wide-range power source. The voltage applicator 40 makes adjustments to the voltage applied between the anode 100 and the cathode 200 and the current that flows between the anode 100 and the cathode 200. Through the adjustments, the voltage applicator 40 adjusts the electric power fed to the water electrolyzer 4 to a predetermined value.

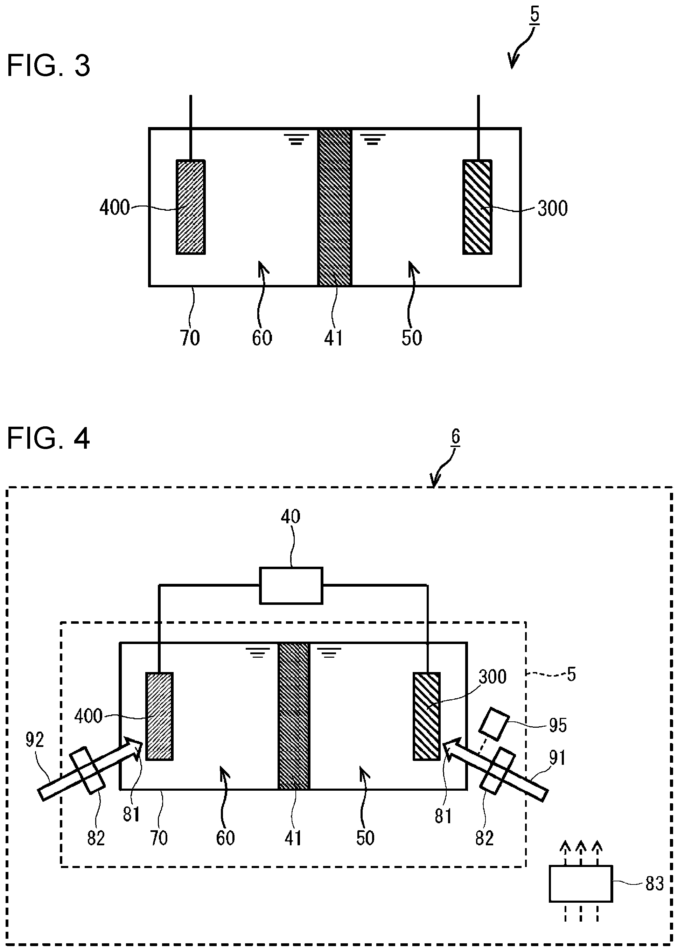

Fig. 3 is a cross-sectional view schematically illustrating an example of an alkali separation membrane-type water electrolysis cell. The water electrolysis cell 5 illustrated in Fig. 3 includes an anode 300 and a cathode 400. The water electrolysis cell 5 further includes an electrolytic bath 70, a first space 50, and a second space 60. The anode 300 is disposed in the first space 50. The cathode 400 is disposed in the second space 60. The water electrolysis cell 5 includes a separation membrane 41. The first space 50 and the second space 60 are separated from each other with the separation membrane 41. The separation membrane 41 is disposed inside the electrolytic bath 70.

The anode 300 and the cathode 400 each include a catalyst layer. The catalyst layer included in the anode 300 may be referred to as "anode electrode catalyst layer". The catalyst layer included in the cathode 400 may be referred to as "cathode electrode catalyst layer". The separation membrane 41 is interposed between the anode and cathode electrode catalyst layers. The separation membrane 41 may be, but not limited to, an electrolyte membrane. The separation membrane 41 may be, but not necessarily, porous.

Fig. 4 is a cross-sectional view schematically illustrating an example of an alkali separation membrane-type water electrolyzer. The water electrolyzer 6 illustrated in Fig. 4 includes a water electrolysis cell 5 and a voltage applicator 40. The voltage applicator 40 is connected to the anode 300 and the cathode 400 of the water electrolysis cell 5. Since the water electrolysis cell 5 illustrated in Fig. 4 is the same as the element illustrated in Fig. 3, the description thereof is omitted.

The alkali separation membrane-type water electrolysis cell is not limited to the alkali separation membrane-type water electrolysis cells illustrated in Figs. 3 and 4. In an alkali separation membrane-type water electrolysis cell according to a modification example, as in the anion exchange membrane-type water electrolysis cell illustrated in Figs. 1 and 2, the anode includes a catalyst layer and an anode diffusion layer and the cathode includes a catalyst layer and a cathode diffusion layer. The features that can be applied to the cell or device illustrated in Figs. 1 to 4 can also be applied to the alkali separation membrane-type water electrolysis cell according to the modification example and a water electrolyzer that includes the cell unless a contradiction arises. Examples of the alkali separation membrane-type water electrolysis cell according to the modification example include an alkali separation membrane-type water electrolysis cell having a zero-gap structure.

### [Electrode Catalyst Layer]

The electrode catalyst layer is described below. The anode electrode catalyst layer 30 described above with reference to Figs. 1 and 2 may have the structure of the electrode catalyst layer described below. The same applies to the cathode electrode catalyst layer 32 described above with reference to Figs. 1 and 2 and the catalyst layers included in the anode 300 and the cathode 400 described above with reference to Figs. 3 and 4. The same applies also to the catalyst layers included in the anode and cathode of the alkali separation membrane-type water electrolysis cell according to the above modification example.

In water electrolysis, a hydrogen gas and an oxygen gas are produced. The electrode catalyst layer includes a material reactive to a reaction in which these gases are produced. Examples of such a material include a layered double hydroxide (LDH), iridium oxide (IrOx), and platinum (Pt).

The LDH includes two or more transition metals. The transition metals include, for example, at least two selected from the group consisting of V, Cr, Mn, Fe, Co, Ni, Cu, W, and Ru.

The LDH has a composition represented by, for example, Composition Formula (1) below.

[M1²⁺₁₋ₓM2³⁺ₓ(OH)₂][yAⁿ⁻·mH₂O] ··· Composition Formula (1)

In Composition Formula (1), M1²⁺ represents a divalent transition metal ion; M2³⁺ represents a trivalent transition metal ion; Aⁿ⁻ represents an interlayer anion; x represents a rational number that satisfies 0 < x < 1; y represents a number that corresponds to the amount required for achieving charge balance; n represents an integer; and m represents a rational number.

The LDH may include Ni and Fe. In Composition Formula (1), M1 may be Ni and M2 may be Fe. That is, the transition metal elements included in the LDH may be Ni and Fe. In such a case, the electrode catalyst may have a higher catalytic activity than, for example, an LDH including Co as M1.

The LDH may include a chelating agent. In such a case, the chelating agent may be coordinated to the transition metal ions included in the LDH. This enhances the dispersion stability of the LDH. Furthermore, since the LDH includes the chelating agent, LDH particles having a small size can be synthesized and, consequently, the surface area of the LDH particles can be increased. This enhances the catalytic activity. The average particle size of the LDH may be 100 nm or less and may be, for example 50 nm or less. The average particle size of the LDH is a value obtained by representing a grain size distribution obtained by small angle X-ray scattering (SAXS) in the form of a two-dimensional distribution diagram that represents the relationship between particle size and distribution and dividing the area of the two-dimensional distribution diagram by the total number of the particles. The term "distribution" used herein refers to a value proportional to the total volume of the particles having the particle size. The area of the two-dimensional distribution diagram is, for example, the product of the particle size and the number of particles that correspond to the particle size.

The chelating agent is not limited to a specific chelating agent. The chelating agent is, for example, an organic compound coordinated to a transition metal included in the LDH. The chelating agent may be at least one selected from the group consisting of a bidentate organic ligand and a tridentate organic ligand. Examples of the chelating agent include β-diketone, β-ketoester, and hydroxycarboxylic acid. Examples of the β-diketone include acetylacetone (ACAC), trifluoroacetylacetone, hexafluoroacetylacetone, benzoylacetone, thenoyltrifluoroacetone, dipivaloylmethane, dibenzoylmethane, and ascorbic acid. Examples of the β-ketoester include methyl acetoacetate, ethyl acetoacetate, allyl acetoacetate, benzyl acetoacetate, n-propyl acetoacetate, iso-propyl acetoacetate, n-butyl acetoacetate, iso-butyl acetoacetate, tert-butyl acetoacetate, 2-methoxyethyl acetoacetate, and methyl 3-oxopentanoate. Examples of the hydroxycarboxylic acid and the salts thereof include tartaric acid, citric acid, malic acid, gluconic acid, ferulic acid, lactic acid, glucuronic acid, and the salts thereof. The chelating agent may include at least one selected from the group consisting of acetylacetone and trisodium citrate. The chelating agent may be at least one selected from the group consisting of acetylacetone and trisodium citrate.

Aⁿ⁻ represents an interlayer ion. Aⁿ⁻ is an inorganic or organic ion. Examples of the inorganic ion include CO₃²⁻, NO₃⁻, Cl⁻, SO₄²⁻, Br⁻, OH⁻, F⁻, I⁻, Si₂O₅²⁻, B₄O₅(OH)₄²⁻, and PO₄³⁻. Examples of the organic ion include CH₃(CH₂)ₙSO₄⁻, CH₃(CH₂)ₙCOO⁻, CH₃(CH₂)ₙPO₄⁻, and CH₃(CH₂)ₙNO₃⁻. Aⁿ⁻ is an anion intercalated between metal hydroxide layers together with water molecules. The electric charge and ionic size of Aⁿ⁻ are not limited to specific values. The types of Aⁿ⁻ included in the LDH may be one or two or more.

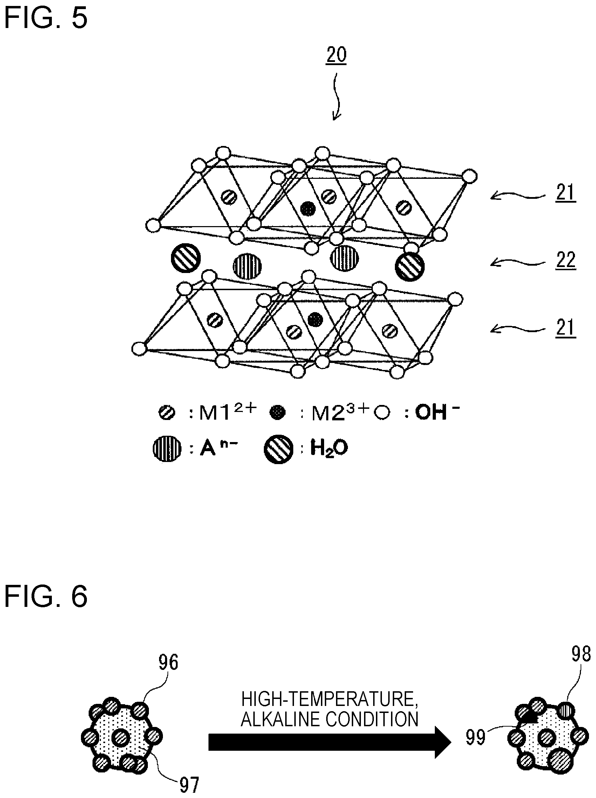

Fig. 5 is a diagram schematically illustrating an example of the crystal structure of the LDH. Specifically, Fig. 5 schematically illustrates an example of the crystal structure of the LDH represented by Composition Formula (1). As illustrated in Fig. 5, an LDH 20 includes eight-face bodies each including M1²⁺ or M2³⁺ as a center and OH⁻ ions attached to the vertices of the eight-face bodies. The metal hydroxide is represented by [M1²⁺₁₋ₓM2³⁺ₓ(OH)₂]^{x+}. The metal hydroxide has a layered structure constituted by the hydroxide eight-face bodies joined with one another in a two-dimensional manner as a result of shearing their edges with one another. Anions and water molecules are intercalated between the metal hydroxide layers. The metal hydroxide layers serve as host layers 21. Anions and water molecules are intercalated therebetween as guest layers 22. That is, as a whole, the LDH 20 has a sheet-like structure constituted by the host layers 21 composed of metal hydroxide and the guest layers 22 composed of anions and water molecules which are alternately stacked on top of one another. The LDH 20 has a structure in which a part of the M1²⁺ ions included in the metal hydroxide layers are replaced with M2³⁺ ions. Therefore, commonly, the surfaces of particles of the LDH 20 are positively charged.

The electrode catalyst layer may further include a carrier. In such a case, since a carrier typically has electrical conductivity, the catalytic activity of the electrode catalyst can be readily maintained to be high. The carrier is not limited to a specific material. Examples of the carrier include a transition metal and a carbon material. Examples of the transition metal include V, Cr, Mn, Fe, Co, Ni, Cu, W, and Ru. Examples of the carbon material include acetylene black and Ketjenblack (KB).

The shape of the carrier is not limited to a specific shape. The shape of the carrier may be foam-like or particulate. The size of the carrier is not limited to a specific size.

The electrode catalyst layer may further include an organic high-molecular-weight compound. An organic high-molecular-weight compound is typically used to reduce the detachment of the catalyst. In such a case, the durability of the electrode catalyst layer can be readily maintained to be high. The organic high-molecular-weight compound is not limited to a specific material. Examples of the organic high-molecular-weight compound include a perfluoropolymer, a perfluorosulfonic acid polymer, and a high-molecular-weight compound the backbone of which includes a polystyrene skeleton. The shape, size, and degree of polymerization of the organic high-molecular-weight compound are not limited.

### [Electrolyte Membrane]

The electrolyte membrane is described below. The electrolyte membrane 31 described with reference to Figs. 1 and 2 may have the structure of the electrolyte membrane described below. In the case where an alkali separation membrane-type water electrolysis cell includes an electrolyte membrane, the same applies to the electrolyte membrane.

The electrolyte membrane is not limited to a specific type. The electrolyte membrane may be porous and may have ionic conductivity. The electrolyte membrane may be an anion-exchange membrane. The electrolyte membrane has a structure that reduces the likelihood of an oxygen gas generated in the anode and a hydrogen gas generated in the cathode being mixed with each other. The above-described structure may limit an increase in the overvoltage of the water electrolysis cell. Note that the term "overvoltage" used herein refers to, in an electrochemical reaction, the difference between the theoretical potential (equilibrium electrode potential) of the reaction which is thermodynamically required and the electrode potential at which the actual reaction occurs. The electrolyte membrane may be porous and may have electron conductivity. The electrolyte membrane may have resistance.

### [Diffusion Layer]

The diffusion layer is described below. The anode diffusion layer 33 described with reference to Figs. 1 and 2 may have the structure of the diffusion layer described below. The same applies to the cathode diffusion layer 34. In the case where the alkali separation membrane-type water electrolysis cell includes an anode diffusion layer, the same applies to the anode diffusion layer. In the case where the alkali separation membrane-type water electrolysis cell includes a cathode diffusion layer, the same applies to the cathode diffusion layer.

The diffusion layer is not limited to a specific type. Examples of the diffusion layer include nickel, titanium, platinum, and carbon. The above-described structure may limit an increase in the overvoltage of the water electrolysis cell. Note that, in this context, the nickel, etc. may be a single element or a compound.

### [Electrolyte Solution]

The electrolyte solution is described below. The water electrolyzer 4 described with reference to Fig. 2 may include the electrolyte solution described below. The same applies to the water electrolyzer 6 described with reference to Fig. 4. The same applies to a water electrolyzer that includes the alkali separation membrane-type water electrolysis cell according to the modification example.

In the case where the water electrolyzer is an anion exchange membrane-type water electrolyzer or an alkali separation membrane-type water electrolyzer, a neutral or alkaline aqueous solution may be used as an electrolyte solution. The alkaline aqueous solution is not limited to a specific type. Examples of the alkaline aqueous solution include an aqueous KOH solution, an aqueous NaOH solution, an aqueous K₂CO₃ solution, an aqueous KHCO₃ solution, an aqueous Na₂CO₃ solution, and an aqueous NaHCOs solution.

### [Heater]

The water electrolyzer includes a heater 82 that heats the electrolyte solution. The heater 82 is, for example, an electric heater. The electric heater may be either an electrical resistance heater or an infrared heater. The heater 82 is not limited to an electric heater; the heater 82 may have any structure with which the electrolyte solution can be heated. The heater 82 may be, for example, a heat exchanger that performs heat exchange with a heated heating medium.

The water electrolyzer 4 illustrated in Fig. 2 includes first and second feed channels 91 and 92 and a heater 82. The first feed channel 91 feeds the anode 100 with an electrolyte solution 81. The second feed channel 92 feeds the cathode 200 with the electrolyte solution 81. In the example illustrated in Fig. 2, both first and second feed channels 91 and 92 are provided with the heater 82. Alternatively, only one of the first and second feed channels 91 and 92 may be provided with the heater 82. The first and second feed channels 91 and 92 are, for example, pipes.

The water electrolyzer 6 illustrated in Fig. 4 includes first and second feed channels 91 and 92 and a heater 82. The first feed channel 91 feeds the anode 300 with an electrolyte solution 81. The second feed channel 92 feeds the cathode 400 with the electrolyte solution 81. In the example illustrated in Fig. 4, both first and second feed channels 91 and 92 are provided with the heater 82. Alternatively, only one of the first and second feed channels 91 and 92 may be provided with the heater 82. The first and second feed channels 91 and 92 are, for example, pipes.

In the water electrolyzers 4 and 6, one of the first and second feed channels 91 and 92 is omissible.

In a first modification example, the first feed channel 91 is present, while the second feed channel 92 is absent. The electrolyte solution fed from the first feed channel 91 is fed to the anode 100 or 300 and the cathode 200 or 400. For example, the electrolyte solution is fed from the first feed channel 91 to the cathode 200 or 400 through the anode 100 or 300. The first feed channel 91 is provided with the heater 82.

In a second modification example, the first feed channel 91 is absent, while the second feed channel 92 is present. The electrolyte solution fed from the second feed channel 92 is fed to the cathode 200 or 400 and the anode 100 or 300. For example, the electrolyte solution is fed from the second feed channel 92 to the anode 100 or 300 through the cathode 200 or 400. The second feed channel 92 is provided with the heater 82.

In the water electrolyzer 4 illustrated in Fig. 2, the heater 82 may be a rubber heater. The rubber heater may be attached to the water electrolysis cell 3. In the water electrolyzer 6 illustrated in Fig. 4, the heater 82 may be a rubber heater. The rubber heater may be attached to the water electrolysis cell 5. Another specific example of the heater 82 is a sheathed heater.

### [Controller]

The water electrolyzer 4 illustrated in Fig. 2 and the water electrolyzer 6 illustrated in Fig. 4 include a controller 83. In a typical example, the controller 83 includes a processing unit and a memory unit. The memory unit stores a program used for executing the control. Specifically, the program includes a program that controls the heater 82 and a program that controls the voltage applicator 40. The processing unit executes the program. Upon the execution of the program, the heater 82 and the voltage applicator 40 are controlled. The controller 83 is, for example, a microcomputer.

### [Temperature Adjusting Function]

The water electrolyzer 4 illustrated in Fig. 2 and the water electrolyzer 6 illustrated in Fig. 4 have a temperature adjusting function responsible for the adjustment of the temperature of the electrolyte solution 81. The temperature adjusting function enables an operation under a high-temperature condition, which is required by an anion exchange membrane-type or alkali separation membrane-type water electrolyzer.

For example, the water electrolyzer 4 illustrated in Fig. 2 and the water electrolyzer 6 illustrated in Fig. 4 include a temperature sensor 95. The temperature adjusting function can be realized using the temperature sensor 95. The temperature sensor 95 is, for example, a thermocouple.

In a specific example, the controller 83 controls the heat produced by the heater 82 such that the temperature of the electrolyte solution 81 which is detected by the temperature sensor 95 follows the target temperature. The temperature adjusting function may be realized in the above-described manner. In the examples illustrated in Figs. 2 and 4, the temperature sensor 95 is disposed in the first feed channel 91 at a position closer to the anode 100 or 300 than the heater 82. Note that the position of the temperature sensor 95 is not limited. For example, the temperature sensor 95 may be disposed in the second feed channel 92 at a position closer to the cathode 200 or 400 than the heater 82.

### [Reduction in Degradation of Nickel]

The electrode catalyst, the diffusion layer, the electrolyte membrane, etc. may be exposed to an electrolyte solution having a high temperature. This exposure may cause the members constituting these components to chemically degrade. In fact, in the case where the electrode catalyst, the diffusion layer, the electrolyte membrane, etc. include nickel, nickel may be unstable thermodynamically and kinetically when exposed to an electrolyte solution having a high temperature. Note that, in this context, the term "nickel" refers to a metal species "nickel" that is a single element or that may form a compound.

Fig. 6 is a diagram schematically illustrating the degradation of catalyst and carrier particles that include nickel. Fig. 6 schematically illustrates the situation in which a carrier particle 97 that includes catalyst particles 96 deposited thereon is exposed to a high-temperature alkaline condition. The carrier particle 97 includes a nickel single element. The catalyst particles 96 include a Ni-Fe LDH. In the example illustrated in Fig. 6, this exposure causes the Ni-Fe LDH included in the catalyst particles 96 and the nickel single element included in the carrier particle 97 to degrade. Fig. 6 schematically illustrates a degraded portion 98 of the catalyst particles 96 and a degraded portion 99 of the carrier particle 97. The degradation of the Ni-Fe LDH included in the catalyst particles 96 may degrade specific activity. The degradation of the nickel single element included in the carrier particle 97 may degrade electrical conductivity.

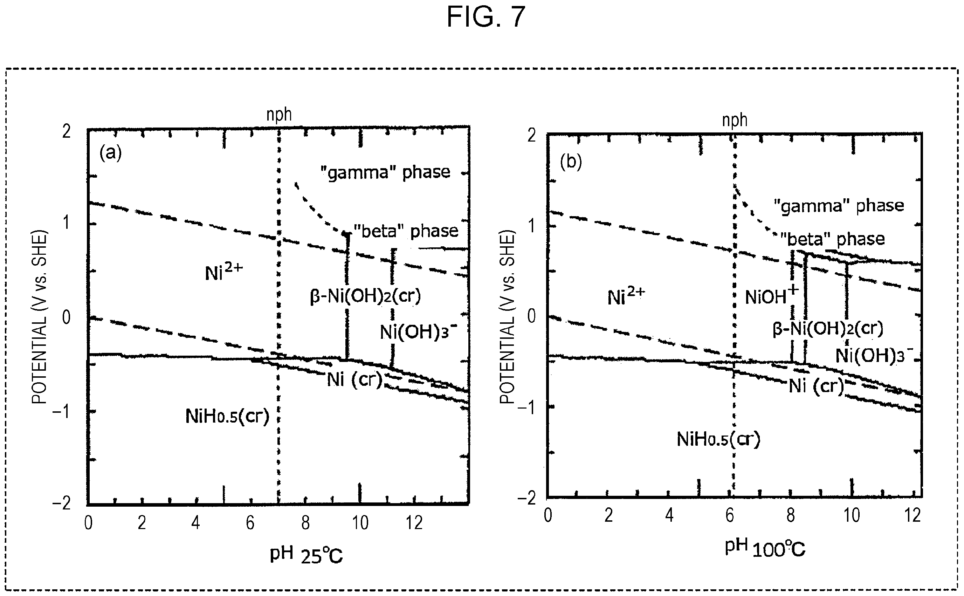

Fig. 7 includes Pourbaix diagrams of nickel. Specifically, the left part (a) of Fig. 7 is a Pourbaix diagram of nickel at 25°C, and the right part (b) of Fig. 7 is a Pourbaix diagram of nickel at 100°C. Pourbaix diagrams of nickel are described also in NPL 1. The Pourbaix diagrams of nickel show that, when nickel is exposed to an electrolyte solution, it becomes thermodynamically unstable. Specifically, when nickel is exposed to an electrolyte solution, it may degrade into β-Ni(OH)₂. However, according to the studies conducted by the inventors of the present invention, applying an adequate voltage to nickel reduces the degree of instability of nickel and the degradation of nickel. This can be also understood from the Pourbaix diagrams of nickel.

Specifically, as can be understood from Fig. 7, applying a voltage to nickel enables nickel to be present in a "gamma" phase instead of β-Ni(OH)₂. This limits the reduction in the electrolysis efficiency of the water electrolysis cell.

The theoretical voltage required for causing water electrolysis is 1.23 V. Thus, when a voltage that causes water electrolysis is applied, a voltage sufficient for limiting the reduction in the electrolysis efficiency of the water electrolysis cell is applied to nickel.

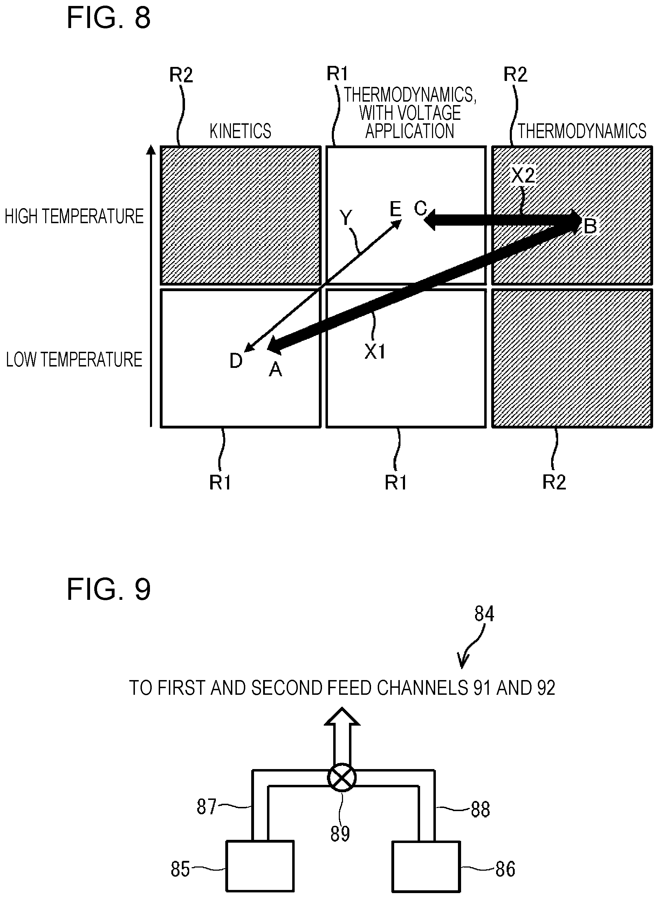

Although further studies need to be conducted to clarify details, the degradation of nickel and a reduction in the degradation of nickel may be based on a kinetic action in addition to the thermodynamic action illustrated in the Pourbaix diagrams. The above point is described below with reference to Fig. 8. Fig. 8 is a diagram schematically illustrating regions in which nickel is stable and regions in which nickel is likely to degrade.

In Fig. 8, the vertical axis represents temperature. The lower part is a low temperature-side, while the upper part is a high temperature-side. In Fig. 8, three regions R1 are region in which nickel is stable, and three regions R2 are regions in which nickel is likely to degrade. The regions R1 and R2 that belong to the left column in Fig. 8 mean that, kinetically, nickel is stable at low temperatures and is likely to degrade at high temperatures. The two regions R2 that belong to the right column in Fig. 8 mean that, thermodynamically, nickel is likely to degrade at either low or high temperatures when a voltage is not applied to nickel. The regions R1 and R2 that belong to the middle column in Fig. 8 mean that, thermodynamically, nickel is stable at either low or high temperatures when a voltage is applied to nickel.

Changing the situation of the nickel from a first to second situation by increasing the temperature of the nickel and adjusting the voltage applied to the nickel is discussed below. The first situation is a situation in which a voltage is not applied to the nickel and the nickel is exposed to a low temperature. The second situation is a situation in which a voltage is applied to the nickel and the nickel is exposed to a high temperature. The application of the voltage to the nickel is started after the temperature of the nickel has been increased to a high temperature. In such a case, the situation of the nickel transits from the point A to B as denoted by the arrow X1 and subsequently transits from the point B to C as denoted by the arrow X2. The points A and C belong to the region R1, in which nickel is stable, while the point B belongs to the region R2, in which nickel is likely to degrade. That is, the situation of the nickel transits through the region R2, in which nickel is likely to degrade. On the basis of the above fact, it is considered that the nickel is likely to degrade in the case where the application of a voltage to the nickel is started after the temperature of the nickel has been increased to a high temperature.

Changing the situation of the nickel from a third to fourth situation by increasing the temperature of the nickel and adjusting the voltage applied to the nickel is discussed below. The third situation is a situation in which a voltage is not applied to the nickel and the nickel is exposed to a low temperature. The fourth situation is a situation in which a voltage is applied to the nickel and the nickel is exposed to a high temperature. The application of the voltage to the nickel is started when the temperature of the nickel is low. In such a case, the situation of the nickel transits from the point D to E as denoted by the arrow Y. The points D and E belong to the region R1, in which nickel is stable. That is, the situation of the nickel transits without passing through the region R2, in which nickel is likely to degrade. On the basis of the above fact, it is considered that the degradation of the nickel is readily reduced in the case where the application of a voltage to the nickel is started when the temperature of the nickel is low.

As can be understood from the description related to the water electrolyzers 4 and 6 above, in this embodiment, the water electrolyzer can be described as follows.

The water electrolyzer includes the electrochemical cell, the electrolyte solution 81, the heater 82, the voltage applicator 40, and the controller 83. The heater 82 heats the electrolyte solution 81. The voltage applicator 40 applies a voltage between the anode and cathode of the electrochemical cell.

The electrochemical cell includes nickel. Note that, in this context, the nickel may be either a nickel single element or a compound of nickel.

For example, at least one of the anode or cathode catalyst included in the electrochemical cell includes a layered double hydroxide. The layered double hydroxide includes nickel. In an example, both anode and cathode catalysts included in the electrochemical cell include the layered double hydroxide. In another example, among the anode and cathode catalysts included in the electrochemical cell, only the anode catalyst includes the layered double hydroxide. In still another example, among the anode and cathode catalysts included in the electrochemical cell, only the cathode catalyst includes the layered double hydroxide. Note that, in this context, the term "anode catalyst" refers to the catalyst included in the anode catalyst layer of the electrochemical cell, and the term "cathode catalyst" refers to the catalyst included in the cathode catalyst layer of the electrochemical cell.

For example, at least one of the carrier on which the anode catalyst of the electrochemical cell is deposited or the carrier on which the cathode catalyst of the electrochemical cell is deposited includes nickel. In an example, both of the carriers for the anode and cathode catalysts of the electrochemical cell include nickel. In another example, among the carriers for the anode and cathode catalysts of the electrochemical cell, only the carrier for the anode catalyst includes nickel. In still another example, among the carriers for the anode and cathode catalysts of the electrochemical cell, only the carrier for the cathode catalyst includes nickel. Note that, in this context, the nickel may be either nickel particles or porous nickel. Specific examples of the porous nickel include a nickel foam.

For example, at least one of the anode or cathode diffusion layer included in the electrochemical cell includes nickel. In an example, both anode and cathode diffusion layers of the electrochemical cell include nickel. In another example, among the anode and cathode diffusion layers of the electrochemical cell, only the anode diffusion layer includes nickel. In still another example, among the anode and cathode diffusion layers of the electrochemical cell, only the cathode diffusion layer includes nickel.

The water electrolyzer has first and second structures.

The first structure is a structure in which, in the startup, the controller 83 causes the heater 82 to increase the temperature of the electrolyte solution by heating.

The second structure is a structure in which, in the startup of the water electrolyzer, the controller 83 causes the voltage applicator 40 to start the application of a voltage when the temperature of the electrolyte solution is less than a predetermined threshold value. Note that, in this context, specifically, the voltage is applied between the anode and the cathode. The temperature of the electrolyte solution is typically the temperature of an electrolyte solution present at a position immediately before the position at which the electrolyte solution is fed to the anode or the temperature of an electrolyte solution present at a position immediately before the position at which the electrolyte solution is fed to the cathode.

In the second structure according to the first example, the controller 83 causes the voltage applicator 40 to start the application of a voltage when the temperature of the electrolyte solution detected by the temperature sensor 95 reaches a start temperature. The start temperature is a temperature less than the predetermined threshold value.

In the second structure according to the second example, the controller 83 causes the voltage applicator 40 to start the application of a voltage at a predetermined timing such that the voltage applicator 40 starts the application of a voltage when the temperature of the electrolyte solution is less than a predetermined threshold value. The predetermined timing in the second example is set in consideration of the mode in which the temperature of the electrolyte solution is increased according to the first structure. In a specific example of the second example, the controller 83 counts the amount of time from the start of the heating of the electrolyte solution or the amount of time from the start of the heating performed by the heater 82 with a timer and causes the voltage applicator 40 to start the application of a voltage when the amount of time counted reaches the predetermined amount of time. The timer may be either a software timer included in a microcomputer or a hardware timer.

According to the first example, the degree by which the temperature of the electrolyte solution has been increased can be directly sensed using the temperature sensor 95 and, accordingly, the timing at which the application of a voltage by the voltage applicator 40 is to be started can be determined. According to the second example, the degree by which the temperature of the electrolyte solution has been increased can be indirectly sensed and, accordingly, the timing at which the application of a voltage by the voltage applicator 40 is to be started can be determined. Note that, as can be understood from the first and second examples, it should be understood that the meaning of the term "threshold value" is not limited to a value at which a switchover of the control is made.

The second structure is further described below.

The timing at which the application of the voltage is started may be any timing at which the temperature of the electrolyte solution is less than a predetermined temperature. For example, the above timing may be a timing before the heating by the heater 82 is started, a timing at which the above heating is started, or a timing after the above heating has been started. The second structure can be satisfied in any of the above cases.

The applied voltage may be equal to or more than the voltage at which the degree of degradation of the nickel included in the electrochemical cell can be reduced. The second structure can be satisfied when the applied voltage is at the above level. The degradation of nickel is, for example, the production of a hydroxide.

The voltage at which the degree of degradation of the nickel included in the electrochemical cell can be reduced may be determined by experiment or the like.

The applied voltage may be determined such that, for example, in a Pourbaix diagram of the nickel included in the electrochemical cell, the potential is higher than that corresponding to the region in which hydroxide exists. In the example illustrated in Fig. 7, the applied voltage may be determined such that, in the above Pourbaix diagram, the potential is equal to the potential that corresponds to the region in which the "gamma" phase exists. Note that the Pourbaix diagram illustrated in Fig. 7 is merely an example of the Pourbaix diagram used for determining the applied voltage. For example, a Pourbaix diagram of an LDH that includes nickel can also be used in addition to or instead of the Pourbaix diagram of nickel. In such a case, "Pourbaix diagram of nickel" shall be read as "Pourbaix diagram of nickel and Pourbaix diagram of an LDH including nickel" or "Pourbaix diagram of an LDH including nickel". The applied voltage is, for example, 0.54 V or more. Note that "0.54 V" is the voltage that can be read from the Pourbaix diagram illustrated in the part (b) of Fig. 7.

An example of the manner in which the voltage applied by the voltage applicator 40 is changed is described below. The applied voltage may be increased in a stepwise manner. In another case, the applied voltage may be increased gradually. The expression "the applied voltage is increased gradually" used herein means that the applied voltage is increased over a nonzero length of time.

In a specific example, when the temperature of the electrolyte solution reaches a start temperature, the application of the voltage by the voltage applicator 40 is started and, subsequently, the voltage is increased in a stepwise manner. The above start temperature is a temperature less than a predetermined threshold value. The above structure reduces the amount of electric power consumed before the temperature of the electrolyte solution reaches the start temperature, which does not contribute to the water electrolysis operation. The timing at which the application of the voltage by the voltage applicator 40 is started may be any timing at which the temperature of the electrolyte solution is less than a predetermined threshold value. For example, the above timing may be either a timing after or before the heating of the electrolyte solution by the heater 82 is started.

In a typical example, the controller 83 controls the voltage applied by the voltage applicator 40 to be an ordered voltage. In this case, the voltage applied to the water electrolysis cell is unlikely to be unstable compared with the case where the current is controlled to be an ordered current. This is advantageous in that the possibility of an excessively high voltage being applied to the water electrolysis cell to cause malfunctions of the water electrolysis cell is reduced. Specifically, the controller 83 generates an ordered voltage. The controller 83 causes the voltage of the voltage applicator 40 to follow the ordered voltage. More specifically, the controller 83 updates the ordered voltage with respect to each control period. The controller 83 causes the voltage of the voltage applicator 40 to follow the ordered voltage that is updated one after another. In the water electrolysis operation, the ordered voltage is set to the rated voltage.

The first and second structures may reduce the degradation of the nickel included in the electrochemical cell. Consequently, the degradation of the performance of the water electrolyzer may be reduced. In the case where the degradation of nickel is reduced compared with the related art, it may correspond to "reduction in the degradation of nickel" in this context. In the case where the degradation of nickel is reduced compared with a mode that does not include the first and second structures, it may correspond to "reduction in the degradation of nickel" in this context.

In a typical example, the predetermined threshold value is lower than the target temperature to which the electrolyte solution is to be heated. The target temperature is, for example, 60°C or more and 100°C or less. According to a numerical example, the target temperature is 80°C, and the predetermined threshold value is a temperature lower than 80°C. Specifically, the predetermined threshold value may be a temperature equal to or less than 60°C or a temperature equal to or less than 40°C. According to a numerical example, the predetermined threshold value is a temperature equal to or more than the freezing point of the electrolyte solution.

The water electrolyzer may include a switcher 84. The switcher 84 performs a switchover of the electrolyte solution fed to the electrochemical cell between neutral and alkaline electrolyte solutions. Before application of the voltage to the voltage applicator 40 is started, the controller 83 causes the switcher 84 to perform a switchover of the electrolyte solution fed to the electrochemical cell to a neutral electrolyte solution. After application of the voltage to the voltage applicator 40 has been started, the controller 83 causes the switcher 84 to perform a switchover of the electrolyte solution to an alkaline electrolyte solution. The above structure reduces the degradation of nickel before the application of the voltage to the voltage applicator 40 and enables alkaline water electrolysis to be performed after the application of the voltage to the voltage applicator 40. Specifically, the program included in the controller 83 may include a program that controls the switcher 84. The switcher 84 can be controlled upon the processing unit of the controller 83 executing the program. Note that, specifically, in the above context, the expression "before the application of the voltage" refers to "before the application of the voltage is started" and the expression "after the application of the voltage" refers to "after the application of the voltage has been started".

In the above structure, the timing at which the switchover of the electrolyte solution is performed is not necessarily the timing at which the application of the voltage by the voltage applicator 40 is done. A switchover to an alkaline electrolyte solution may be performed upon the application of the voltage being done. Alternatively, a switchover to an alkaline electrolyte solution may be performed before the application of the voltage is done. In another case, a switchover to an alkaline electrolyte solution may be performed after the application of the voltage has been done. Note that, specifically, in the above context, the expression "upon the application of the voltage being done" refers to "upon the application of the voltage being started", the expression "before the application of the voltage is done" refers to "before the application of the voltage is started", and the expression "after the application of the voltage has been done" refers to "after the application of the voltage has been started".

Fig. 9 is a schematic diagram illustrating a switcher 84 according to an example. The switcher 84 illustrated in Fig. 9 includes a first container 85, a second container 86, a first channel 87, a second channel 88, and a switch valve 89. The first container 85 stores a neutral electrolyte solution. The second container 86 stores an alkaline electrolyte solution. The first container 85 is connected to the switch valve 89 with the first channel 87. The second container 86 is connected to the switch valve 89 with the second channel 88. In other words, the switch valve 89 is disposed at the confluence of the first channel 87 and the second channel 88.

The switch valve 89 selectively allows any one of the first channel 87 and the second channel 88 to be communicated with the first and second feed channels 91 and 92. In the above-described manner, the switch valve 89 selectively allows any of the neutral electrolyte solution and the alkaline electrolyte solution to flow through the first and second feed channels 91 and 92.

The switcher 84 can be applied to the water electrolyzer 4 illustrated in Fig. 2 and the water electrolyzer 6 illustrated in Fig. 4. Although the switcher 84 is connected to both first and second feed channels 91 and 92 in the example illustrated in Fig. 9, the switcher 84 may be connected to only one of the first and second feed channels 91 and 92.

In an example, the electrolyte solution is neutral at least in the water electrolysis operation. This structure makes it easy to reduce the degradation of nickel.

In another example, the electrolyte solution is alkaline at least in the water electrolysis operation. This structure enables an alkaline water electrolysis to be performed.

The present disclosure also provides a method for controlling a water electrolyzer which includes, in the startup of the water electrolyzer, causing the heater 82 to increase the temperature of the electrolyte solution by heating and, when the temperature of the electrolyte solution is less than a predetermined threshold value, causing the voltage applicator 40 to start the application of the voltage.

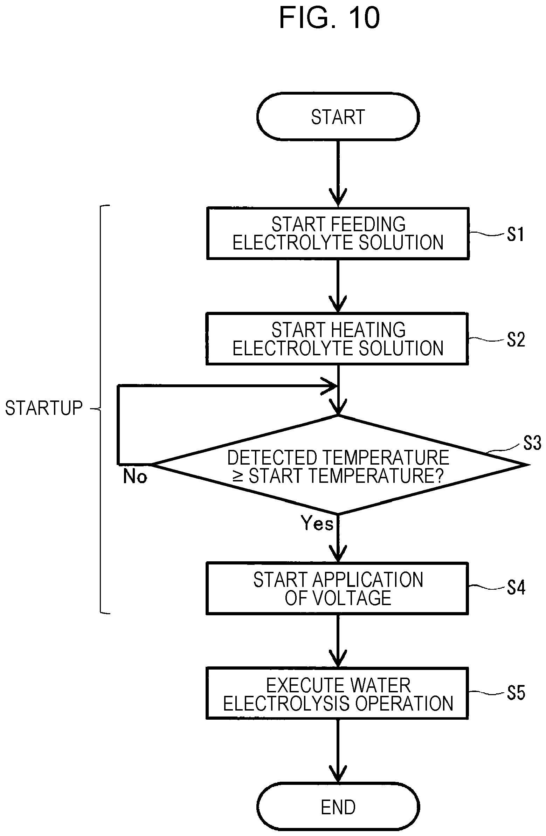

Fig. 10 is a flowchart illustrating a control method according to a specific example. The control method illustrated in the flowchart may be applied to both water electrolyzers 4 and 6 illustrated in Figs. 2 and 4, respectively. Each of the steps included in the control illustrated in this flowchart may be executed by the controller 83.

In Step S1, feeding of the water electrolyzer with the electrolyte solution is started. Specifically, the feeding is performed through at least one of the first and second feed channels 91 and 92 illustrated in Figs. 2 and 4.

In Step S2, the heater 82 starts heating the electrolyte solution. Thus, the temperature of the electrolyte solution starts increasing.

In Step S3, whether or not the value detected by the temperature sensor 95 is equal to or more than the start temperature is determined. In the case where the value detected by the temperature sensor 95 is lower than the start temperature, the Step S3 is again conducted. In the case where the value detected by the temperature sensor 95 is equal to or more than the start temperature, Step S4 is to be conducted. The start temperature is a temperature less than the predetermined threshold value.

In Step S4, the voltage applicator 40 starts applying a voltage between the anode and cathode of the water electrolysis cell.

The operations performed in Steps S1 to S4 correspond to the startup of the water electrolyzer. After the application of the voltage has been started in Step S4, the current applied to the electrochemical cell increases to reach the target current. Thus, the water electrolysis operation of Step S5 is executed.

Various modifications can be made to the flowchart illustrated in Fig. 10. For example, it is not essential to determine the timing at which the application of the voltage is started on the basis of the value detected by the temperature sensor 95 as in Step S3. For example, the above timing may be determined using a timer as described above.

### Test Example

The present disclosure is described in further details with reference to Test Examples below. Note that Test Examples below are merely examples of the present disclosure and the present disclosure is not limited by Test Examples below.

### (Test Example A1)

### (Preparation of Mixture Including Ni-Fe LDH and Ni Particles)

A mixture including a Ni-Fe LDH and Ni particles was prepared in the following manner. First, a mixed solvent of water and ethanol was prepared. The volume ratio between water and ethanol was 2:3. The ethanol used was a guaranteed reagent produced by FUJIFILM Wako Pure Chemical Corporation. Nickel chloride hexahydrate and iron chloride hexahydrate were dissolved in the mixed solvent such that the total concentration of Ni and Fe ions was 1.0 M and the ratio of the amount of substance of the Fe ions to the total amount of substance of the Ni and Fe ions was 0.33. The nickel chloride hexahydrate and iron chloride hexahydrate used were products of FUJIFILM Wako Pure Chemical Corporation. Note that the unit "M" means mol/dm³. To the resulting solution, acetylacetone (ACAC) was added as a chelating agent such that the amount of substance of the acetylacetone was 1/3 of the total amount of substance of the Ni and Fe ions. Subsequent to the addition of acetyl acetone, the solution was stirred. Then, a certain mass of Ni particles which was 2.5 times the mass of the Ni-Fe LDH that is to be produced in the case where the whole amounts of Ni and Fe included in the solution react in an ideal manner was added to the solution. The Ni particles used were Ni particles produced by US Research Nanomaterials, Inc. which had a size of 20 nm. Subsequently, propylene oxide (POX) was added to the solution as a pH increaser in an amount that was double the amount of substance of the chloride ions included in the solution. The resulting mixture was stirred. Since the POX gradually captures the hydrogen ions included in the solution, the pH of the solution was gradually increased. After the reaction had been conducted for 24 hours, a mixture of a Ni-Fe LDH and Ni particles was collected as a sample.

### (Preparation of Anode Electrode Catalyst Layer)

A mixed solvent including water and ethanol at a volume ratio of 1:1 was added to the mixture of a Ni-Fe LDH and Ni particles. The resulting solution was subjected to a pulverization treatment using a high-speed stirrer. Then, 20-wt% Nafion was added to the solution such that the mass of the Nafion was 0.1 times the mass of the mixture. Subsequently, a pulverization treatment was again performed. The Nafion used was a product of Chemours. The resulting anode electrode catalyst ink was applied to a carbon paper sheet by spraying. Hereby, an anode electrode catalyst layer was prepared. Note that adjustment was made such that the amount of the Ni-Fe LDH deposited was 1.2 mg/cm². The carbon paper sheet used was a product of Toray Industries, Inc.

### (Preparation of Cathode Electrode Catalyst Layer)

Water and ethanol were added to platinum-supported carbon (Pt/C) in this order such that the volume ratio between water and ethanol was 1: 1. The Pt/C used was a product of Tanaka Kikinzoku Kogyo K.K. The resulting solution was subjected to a pulverization treatment using a high-speed stirrer. Then, 20-wt% Nafion was added to the solution such that the mass of the Nafion was 0.6 times the mass of Pt. Subsequently, a pulverization treatment was again performed. The Nafion used was a product of Chemours. The resulting cathode electrode catalyst ink was applied to a carbon paper sheet by spraying. Hereby, a cathode electrode catalyst layer was prepared. Note that adjustment was made such that the amount of the Pt deposited was 1.0 mg/cm². The carbon paper sheet used was a product of Toray Industries, Inc.

### (Preparation of Water Electrolysis Cell)

A membrane electrode assembly (MEA) having a sandwich structure was prepared using the anode and cathode electrode catalyst layers prepared as described above and an electrolyte membrane. The electrolyte membrane used was "QPAF-4" produced by Takahata Precision Japan Co., Ltd. A water electrolysis cell including the membrane electrode assembly was prepared. A water electrolyzer including the water electrolysis cell was prepared. Subsequently, an operation in which a current was applied to the membrane electrode assembly at a current density of 1.0 A/cm²n when the membrane electrode assembly was immersed in a 1.0 M aqueous KOH solution at a temperature of 80°C was performed for 60 hours. The water electrolysis cell that had been subjected to the above operation was used as a water electrolysis evaluation cell.

In Test Example A1, the water electrolyzer included devices and members necessary for the electrolysis test. For example, the water electrolyzer included, in addition to the above-described MEA, a gasket that prevents leakage, a separator having a serpentine channel formed therein, a power feed plate, an insulating plate, a fixture having ports formed therein through which a solution was fed or discharged, and the like, which were disposed in the periphery of the MEA. In this regard, the same applies to Test Example B1. The structures of the MEA and the water electrolyzer described above are merely illustrative; the structures of the MEA and the water electrolyzer are merely examples and not limited to those described in the above example.

### (Test Example B1)

Anode and cathode electrode catalyst layers were prepared as in Test Example A1. The anode electrode catalyst layer was immersed in a 1.0 M aqueous KOH solution for 60 hours at a temperature of 80°C. Subsequently, a membrane electrode assembly (MEA) having a sandwich structure was prepared using the anode electrode catalyst layer, which had been subjected to the above immersion treatment, the cathode electrode catalyst layer, which had not been subjected to the above immersion treatment, and an electrolyte membrane. The electrolyte membrane used was "QPAF-4" produced by Takahata Precision Japan Co., Ltd. A water electrolysis cell including the membrane electrode assembly was prepared. A water electrolyzer including the water electrolysis cell was prepared. In Test Example B1, this water electrolysis cell was used as a water electrolysis evaluation cell.

### (Test Example C1)

Anode and cathode electrode catalyst layers were prepared as in Test Example A1. A membrane electrode assembly (MEA) having a sandwich structure was prepared using the anode and cathode electrode catalyst layers and an electrolyte membrane. The electrolyte membrane used was "QPAF-4" produced by Takahata Precision Japan Co., Ltd. A water electrolysis cell including the membrane electrode assembly was prepared. A water electrolyzer including the water electrolysis cell was prepared. In Test Example C1, this water electrolysis cell was used as a water electrolysis evaluation cell.

### (Evaluation of Water Electrolysis Cell)

The electrolysis efficiency of each of the water electrolysis evaluation cells prepared in Test Examples A1, B1, and C1 was measured in the following manner. An aqueous alkaline solution was fed from the lower portion of the fixture of the water electrolyzer and discharged from the upper portion of the fixture such that the aqueous alkaline solution circulated inside the system of the water electrolyzer, in order to make the inside of the system an alkali atmosphere. The voltage applied to the membrane electrode assembly when the aqueous alkaline solution was a 1.0 M aqueous KOH solution, the temperature of the aqueous alkaline solution was 80°C, and a current was applied to the membrane electrode assembly at a current density of 1.0 A/cm² was measured. The electrolysis efficiency was calculated by dividing the theoretical voltage of the water electrolysis by the measured value. The theoretical voltage of the water electrolysis was 1.23 V.

The above description should be understood as being illustrative only and is provided for teaching those skilled in the art the best mode to carry out the present disclosure. The operating conditions, the composition, the structure, and/or functions can be substantially changed without departing from the spirit of the present disclosure.

**[Table 1]**

| | Application of voltage | Electrolysis efficiency |
|---|---|---|
| Test Example C1 | - | 77.5% |
| Test Example A1 | Yes | 76.8% |
| Test Example B1 | No | 67.9% |

Table 1 lists the results of measurement of the electrolysis efficiencies of the water electrolysis evaluation cells prepared in Test Examples A1, B1, and C1. Table 1 also lists whether or not a voltage was applied to the membrane electrode assembly prior to the measurement of electrolysis efficiency. The symbol "-" is shown in the column "Application of voltage" as for Test Example C1, where neither the application of the voltage prior to the measurement of electrolysis efficiency nor the exposure to the alkali condition was performed.

In both of Test Examples A1 and B1, the anode electrode catalyst layer was exposed to an alkali condition at 80°C for 60 hours prior to the measurement of electrolysis efficiency. Note that, in the above exposure treatment, a voltage was applied to the anode electrode catalyst layer in Test Example A1, while the application of the voltage was not performed in Test Example B1. In Test Example A1, a reduction in electrolysis efficiency relative to Test Example C1, which corresponds to the initial state, was small (77.5% - 76.8% = 0.7%), while, in Test Example B1, the above reduction was large (77.5% - 67.9% = 7.6%). On the basis of the result in which the reduction in electrolysis efficiency was large in Test Example B1, it is considered that the nickel included in the materials became chemically degraded as a result of being exposed to the high-temperature alkali conditions. Furthermore, on the basis of the result in which the reduction in electrolysis efficiency was small in Test Example A1, it is considered that the application of the voltage reduced the above chemical degradation.

### [Test of Immersing Mixture Including Ni-Fe LDH and Ni Particles]

### (Test Example A2)

A mixture that included a mixture of a Ni-Fe LDH and Ni particles was prepared as in Test Example A1. The above mixture was immersed in a 1.0 M aqueous KOH solution for 1100 hours at a temperature of 20°C. Subsequently, the mixture was collected and used as a test sample of Test Example A2. Note that, as for the aqueous KOH solution, "1.0 M" corresponds to "pH 14".

### (Test Example A3)

The concentration of the aqueous KOH solution was changed from 1.0 M to 0.1 M. A test sample was prepared as in Test Example A2 except the above change. Note that, as for the aqueous KOH solution, "0.1 M" corresponds to "pH 13".

### (Test Example A4)

The aqueous KOH solution having a temperature of 20°C was changed to water having a temperature of 20°C. A test sample was prepared as in Test Example A2 except the above change. Specifically, the water was pure water having a pH of 7.

### (Test Example A5)

The temperature of the aqueous KOH solution was changed from 20°C to 40°C. A test sample was prepared as in Test Example A2 except the above change.

### (Test Example A6)

The concentration of the aqueous KOH solution was changed from 1.0 M to 0.1 M, and the temperature of the aqueous KOH solution was changed from 20°C to 40°C. A test sample was prepared as in Test Example A2 except the above changes.

### (Test Example A7)

The aqueous KOH solution having a temperature of 20°C was changed to water having a temperature of 40°C. A test sample was prepared as in Test Example A2 except the above change.

### (Test Example B2)

The temperature of the aqueous KOH solution was changed from 20°C to 60°C. A test sample was prepared as in Test Example A2 except the above change.

### (Test Example B3)

The temperature of the aqueous KOH solution was changed from 20°C to 80°C. A test sample was prepared as in Test Example A2 except the above change.

### (Test Example B4)

The concentration of the aqueous KOH solution was changed from 1.0 M to 0.1 M, and the temperature of the aqueous KOH solution was changed from 20°C to 60°C. A test sample was prepared as in Test Example A2 except the above changes.

### (Test Example B5)

The concentration of the aqueous KOH solution was changed from 1.0 M to 0.1 M, and the temperature of the aqueous KOH solution was changed from 20°C to 80°C. A test sample was prepared as in Test Example A2 except the above changes.

### (Test Example B6)

The aqueous KOH solution having a temperature of 20°C was changed to water having a temperature of 60°C. A test sample was prepared as in Test Example A2 except the above change.

### (Test Example B7)

The aqueous KOH solution having a temperature of 20°C was changed to water having a temperature of 80°C. A test sample was prepared as in Test Example A2 except the above change.

### (Test Example C2)

The immersion in the aqueous KOH solution was not performed. A test sample was prepared as in Test Example A2 except the above change. That is, in Test Example C2, the mixture that had not been subjected to the immersion was used as a test sample.

### (Evaluation of Sample by XRD Measurement)

The crystal phase of each of the samples was determined by X-ray diffraction measurement using an X-ray diffraction device at a voltage of 45 kV and a current of 40 mA with CuKα radiation within a measurement range of 5° to 70°. The X-ray diffraction device used was "X'Pert PRO" produced by PANalytical. As a result of the above measurement, XRD profiles of Test Examples A2 to A7, B2 to B7, and C2 were obtained. On the basis of the results of the XRD measurement, the integrated intensity of NiO at a diffraction peak of 43.32°, the integrated intensity of β-Ni(OH)₂ at a diffraction peak of 19.50°, the integrated intensity of LDH at a diffraction peak of 11.13°, and the integrated intensity of Ni at a diffraction peak of 45.57° were determined. The ratio of the integrated intensity of β-Ni(OH)₂ to the integrated intensity of NiO, that is, P-Ni(OH)₂/NiO integral ratio, was determined. The ratio of the integrated intensity of LDH to the integrated intensity of NiO, that is, LDH/NiO integral ratio, was determined. The ratio of the integrated intensity of Ni to the integrated intensity of NiO, that is, Ni/NiO integral ratio, was determined. Hereinafter, the above integral ratios may be referred to as "XRD integral ratios". Table 2 lists the XRD integral ratios determined in Test Examples A2 to A7 and B2 to B7.

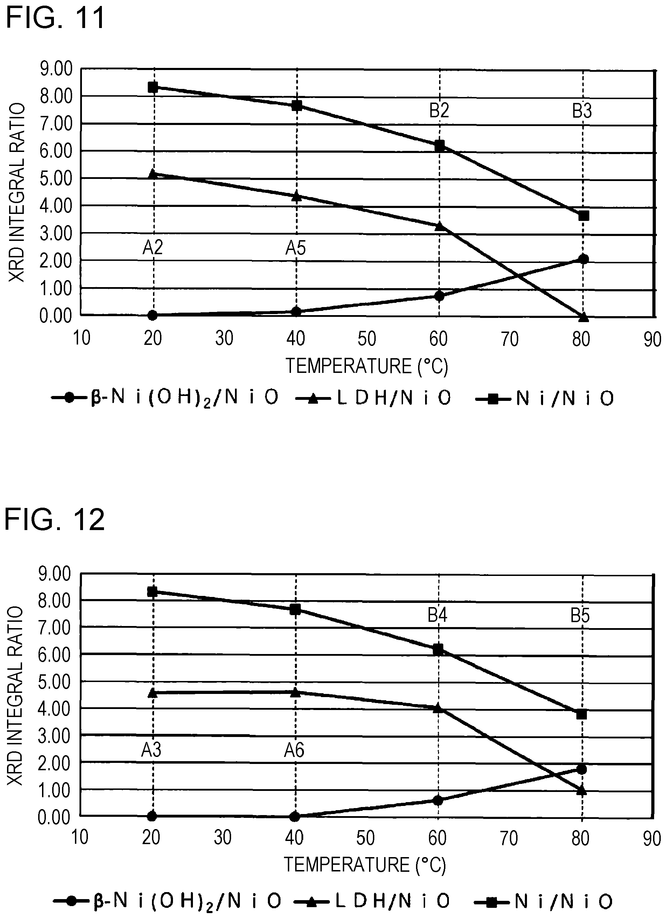

In Test Examples A2, A5, B2, and B3, the concentration of the aqueous KOH solution was 1.0 M. The temperatures of the aqueous KOH solutions used in Test Examples A2, A5, B2, and B3 were 20°C, 40°C, 60°C, and 80°C, respectively. Fig. 11 includes graphs illustrating the XRD integral ratios determined in Test Examples A2, A5, B2, and B3. In Fig. 11, the horizontal axis represents the temperature of the aqueous KOH solution, while the vertical axis represents the XRD integral ratio. As can be understood from Fig. 11 and Table 2, the amount of β-Ni(OH)₂ produced is significantly small at 20°C and 40°C, while the amounts of β-Ni(OH)₂ produced significantly increases and the amounts of LDH and Ni decreases at 60°C and 80°C. On the basis of the above facts, it is considered that LDH or Ni changed to β-Ni(OH)₂ at 60°C and 80°C. It is also considered that the upper limit for the temperature of the aqueous KOH solution at which the formation of β-Ni(OH)₂ is suppressed is 40°C.

In Test Examples A3, A6, B4, and B5, the concentration of the aqueous KOH solution was 0.1 M. The temperatures of the aqueous KOH solutions used in Test Examples A3, A6, B4, and B5 were 20°C, 40°C, 60°C, and 80°C, respectively. Fig. 12 includes graphs illustrating the XRD integral ratios determined in Test Examples A3, A6, B4, and B5. In Fig. 12, the horizontal axis represents the temperature of the aqueous KOH solution, while the vertical axis represents the XRD integral ratio. In Test Examples A3, A6, B4, and B5, the same things as in Test Examples A2, A5, B2, and B3 can be considered.

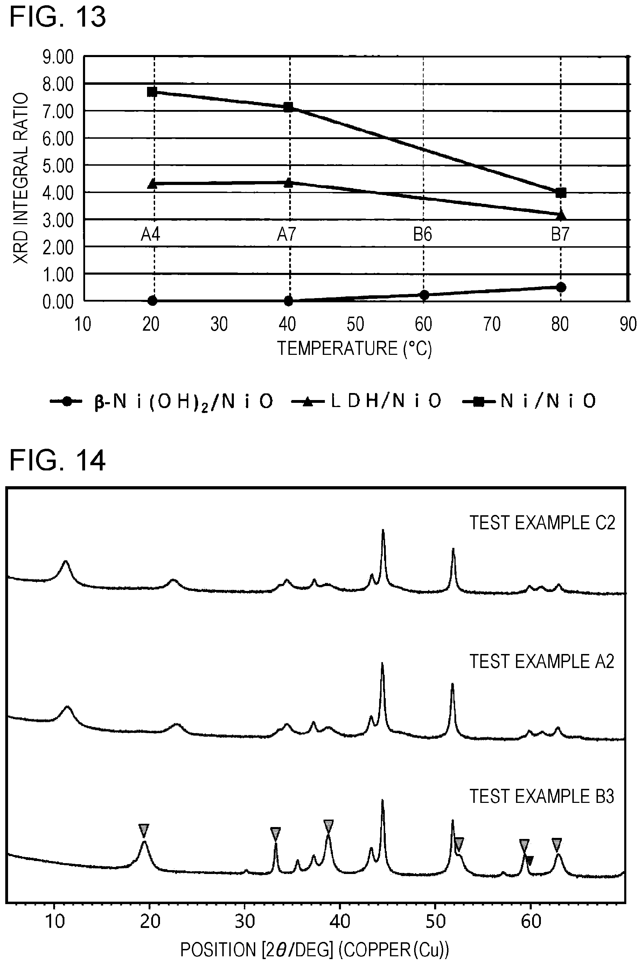

In Test Examples A4, A7, B6, and B7, water was used instead of the aqueous KOH solution. The temperatures of the waters used in Test Examples A4, A7, B6, and B7 were 20°C, 40°C, 60°C, and 80°C, respectively. Fig. 13 includes graphs illustrating the XRD integral ratios determined in Test Examples A4, A7, B6, and B7. In Fig. 13, the horizontal axis represents the temperature of the waters, while the vertical axis represents the XRD integral ratio. In Test Examples A4, A7, B6, and B7, the same things as in Test Examples A2, A5, B2, and B3 can also be considered.

On the basis of the results obtained in Test Examples A2 to A7 and B2 to B7, it is considered that, under medium to high pH conditions, nickel is kinetically stable at room temperature to 40°C but rapidly degrades at high temperatures. It is considered that, in the case where nickel is exposed to a condition having a temperature of more than 40°C, it is effective to apply a voltage to the nickel for reducing the degradation of the nickel.

Fig. 14 is a diagram illustrating examples of XRD spectra of the samples prepared in Test Examples C2, A2, and B3. There is little difference between the XRD spectra of Test Examples A2 and C2. In contrast, in the XRD spectrum obtained in Test Example B3, for example, peaks resulting from β-Ni(OH)₂, which are diffraction peaks at 19.50°, significantly occur compared with the XRD spectrum obtained in Test Example C2.

**[Table 2]**

| | Immersion liquid | Temperature (°C) | β-Ni(OH)₂/NiO integral ratio | LDH/NiO integral ratio | Ni/NiO integral ratio |
|---|---|---|---|---|---|
| Test Example A2 | KOH (pH 14) | 20 | 0 | 5.17 | 8.33 |
| Test Example A3 | KOH (pH 13) | 20 | 0 | 4.58 | 8.33 |
| Test Example A4 | Pure water (pH 7) | 20 | 0 | 4.31 | 7.69 |
| Test Example A5 | KOH (pH 14) | 40 | 0.15 | 4.38 | 7.69 |
| Test Example A6 | KOH (pH 13) | 40 | 0 | 4.62 | 7.69 |
| Test Example A7 | Pure water (pH 7) | 40 | 0 | 4.36 | 7.14 |
| Test Example B2 | KOH (pH 14) | 60 | 0.75 | 3.31 | 6.25 |
| Test Example B3 | KOH (pH 14) | 80 | 2.11 | 0 | 3.70 |
| Test Example B4 | KOH (pH 13) | 60 | 0.63 | 4.06 | 6.25 |
| Test Example B5 | KOH (pH 13) | 80 | 1.81 | 1.04 | 3.85 |
| Test Example B6 | Pure water (pH 7) | 60 | 0.23 | - | - |
| Test Example B7 | Pure water (pH 7) | 80 | 0.52 | 3.20 | 4.00 |

### (Sample Evaluation Using RDE Measurement)

As described above, the concentration of the aqueous KOH solution was 1.0 M in Test Examples A2, A5, B2, and B3. The temperatures of the aqueous KOH solutions used in Test Examples A2, A5, B2, and B3 were 20°C, 40°C, 60°C, and 80°C, respectively. The immersion of the mixture was omitted in Test Example C2. The overvoltages that occurred in the samples prepared in Test Examples A2, A5, B2, B3, and C2 were determined by conducting the RDE (Rotating Disk Electro de) measurement described below.

Specifically, a 1.0 mL of a mixed solution of water and ethanol was prepared. The volume ratio between the water and ethanol included in the mixed solution was 2:8. The above mixed solution was added to 32 mg of each of the samples prepared in Test Examples A2, A5, B2, B3, and C2. Subsequently, a pulverization treatment was performed using ultrasonic wave. A 5 µL of the resulting ink was measured and dropped onto a rotating disk electrode. Then, drying was performed at room temperature. Subsequently, 5 µL of a 0.5-wt% Nafion solution, which was prepared by diluting a 5-wt%Nafion solution ten times with an ethanol solution, was dropped onto the rotating disk electrode. Then, drying was performed. Hereby, an anode electrode was prepared. The Nafion used was a product of Chemours. For each of the anode electrodes, the current derived from an anodic reaction (oxygen evolution reaction) of a water electrolysis cell including the anode electrode was measured. The measurement of current was conducted using a potentiostat and rotating disk electrode (RDE). The potentiostat used was "VersaSTAT4" produced by Princeton Applied Research. The rotating disk electrode used was an electrode produced by Pine Research, Model No. AFE3T050GC. The conditions for the measurement of current were as follows:
· Solution: 1.0 M KOH solution
· Potential: 1.1 to 1.65 V (vs. reversible hydrogen electrode (RHE))
· Potential sweep rate: 10 mV/sec
· Electrode rotation speed: 1500 rpm

Table 3 lists the overvoltages determined by the RDE measurement in Test Examples A2, A5, B2, B3, and C2. The differences between the overvoltages determined in Test Examples A2, A5, B2, and B3 and the overvoltage determined in Test Example C2 correspond to the differences between the overvoltages determined in Test Examples A2, A5, B2, and B3 and the overvoltage that occurred in the sample that had not been subjected to the immersion, respectively. Table 3 also lists the above differences. The results obtained in Test Examples A2 and A5 show that the performance of the sample does not degrade significantly when the sample is subjected to the immersion at 20°C or 40°C. It is also shown that, when the sample is subjected to the immersion at 60°C or 80°C, the performance of the sample degrades significantly.

**[Table 3]**

| | Overvoltage | Difference in overvoltage relative to sample that had not been subjected to immersion |
|---|---|---|
| Test Example C2 | 234 mV | - |
| Test Example A2 | 248 mV | 14 mV |
| Test Example A5 | 280 mV | 46 mV |
| Test Example B2 | 355 mV | 121 mV |
| Test Example B3 | > 420 mV | > 186 mV |

As is described regarding to Test Examples A2, A5, B2, and B3 with reference to Fig. 11, the higher the temperature at which the immersion is performed, the larger the amount of β-Ni(OH)₂ produced. As can be understood from Table 3, the higher the temperature at which the immersion is performed, the higher the overvoltage. The above results confirm that, the larger the amount of β-Ni(OH)₂ produced, the higher the overvoltage. However, as described above, applying a voltage to the nickel reduces the production of β-Ni(OH)₂.

### Industrial Applicability

An aspect of the present disclosure can be used for water electrolysis in which a catalyst that exhibits a low overvoltage compared with the related art is used.

### Reference Signs List

3, 5 water electrolysis cell
4, 6 water electrolyzer
20 LDH
21 host layer
22 guest layer
30, 32 catalyst layer
31 electrolyte membrane
33, 34 diffusion layer
40 voltage applicator
41 separation membrane
50, 60 space
70 electrolytic bath
81 electrolyte solution
82 heater
83 controller
84 switcher
85, 86 container
87, 88 channel
89 switch valve
91, 92 feed channel
95 temperature sensor
96 catalyst
97 carrier
98, 99 degraded portion
100, 300 anode
200, 400 cathode
R1, R2 region

## Claims

1. A water electrolyzer used for water electrolysis, the water electrolyzer comprising:
an electrochemical cell including an anode and a cathode;
an electrolyte solution;
a heater that heats the electrolyte solution;
a voltage applicator that applies a voltage between the anode and the cathode; and
a controller, wherein
the electrochemical cell includes nickel,
in startup of the water electrolyzer, the controller causes the heater to increase a temperature of the electrolyte solution by heating, and
the controller causes the voltage applicator to start application of a voltage when the temperature of the electrolyte solution is less than a predetermined threshold value.

2. The water electrolyzer according to claim 1,
wherein the predetermined threshold value is lower than a target temperature to which the electrolyte solution is to be heated.

3. The water electrolyzer according to claim 1 or 2,
wherein the predetermined threshold value is a temperature equal to or less than 60°C.

4. The water electrolyzer according to claim 3,
wherein the predetermined threshold value is a temperature equal to or less than 40°C.

5. The water electrolyzer according to any one of claims 1 to 4, further comprising:
a switcher that performs a switchover of the electrolyte solution fed to the electrochemical cell between a neutral electrolyte solution and an alkaline electrolyte solution, wherein,
before the voltage applicator applies the voltage, the controller causes the switcher to perform a switchover of the electrolyte solution to the neutral electrolyte solution, and,
after the voltage applicator applies the voltage, the controller causes the switcher to perform a switchover of the electrolyte solution to the alkaline electrolyte solution.

6. The water electrolyzer according to any one of claims 1 to 4,
wherein the electrolyte solution is neutral at least in water electrolysis operation.

7. The water electrolyzer according to any one of claims 1 to 4,
wherein the electrolyte solution is alkaline at least in water electrolysis operation.

8. The water electrolyzer according to any one of claims 1 to 7, wherein
at least one of an anode catalyst included in the anode and a cathode catalyst included in the cathode includes a layered double hydroxide, and
the layered double hydroxide includes nickel.

9. The water electrolyzer according to any one of claims 1 to 8,
wherein at least one of a carrier included in an anode catalyst included in the anode and a carrier included in a cathode catalyst included in the cathode includes nickel.

10. The water electrolyzer according to any one of claims 1 to 8,
wherein at least one of a carrier included in an anode catalyst included in the anode and a carrier included in a cathode catalyst included in the cathode includes nickel particles.

11. The water electrolyzer according to any one of claims 1 to 10,
wherein at least one of an anode diffusion layer included in the anode and a cathode diffusion layer included in the cathode includes nickel.

12. A method for controlling a water electrolyzer, the water electrolyzer including an electrochemical cell including an anode and a cathode, an electrolyte solution, a heater that heats the electrolyte solution, and a voltage applicator that applies a voltage between the anode and the cathode, the electrochemical cell including nickel, the method comprising:
in startup of the water electrolyzer, causing the heater to increase a temperature of the electrolyte solution by heating, and
causing the voltage applicator to start application of a voltage when the temperature of the electrolyte solution is less than a predetermined threshold value.
